# EUROPÄISCHE PATENTSCHRIFT

(11) **EP 0 955 191 B1**
(45) Veröffentlichungstag und Bekanntmachung des Hinweises auf die Patenterteilung: **27.04.2005**
(21) Anmeldenummer: 99108475.7
(22) Anmeldetag: 30.04.1999
(51) Int. Cl.: B60J 5/04

(54) **Einstückiger Türmodul für Kraftfahrzeuge**
One piece door module for automotive vehicle
Module de porte monobloc pour véhicule automobile

(30) Priorität: 05.05.1998 DE 19819632
(43) Veröffentlichungstag der Anmeldung: 10.11.1999
(73) Patentinhaber: Ticona GmbH, 65451 Kelsterbach (DE)
(72) Erfinder: Pfeiffer, Bernhard Dr., 65779 Kelkheim (DE); Reuter, Frank, 63853 Mömlingen (DE); Platz, Reinhold, 64367 Mühltal (DE)

(56) Entgegenhaltungen:
- EP-A- 0 286 923
- EP-A- 0 561 440
- EP-A- 0 826 558
- DE-A- 19 712 266
- DE-A- 19 725 176
- US-A- 4 848 829
- PATENT ABSTRACTS OF JAPAN vol. 1995, no. 09, 31. Oktober 1995 (1995-10-31) & JP 07 156725 A (YAZAKI CORP), 20. Juni 1995 (1995-06-20)

## Beschreibung

Die vorliegend Erfindung betrifft einen einstückigen Türmodul für Kraftfahrzeuge aus thermoplastischem Kunststoff umfassend eine selbsttragende Trägerplatte und eine Vielzahl von integralen Halteelementen in Form von Erhebungen, Vertiefungen und Ausnehmungen, mit dem die Montage der Kraftfahrzeuge erleichtert wird.

Die fortschreitende Automatisierung bei der Montage von Kraftfahrzeugen macht es notwendig oder mindestens hochgradig wünschenswert, dass zusammengehörende Montageeinheiten aus starren und beweglichen Teilen möglichst schon vor ihrem endgültigen Einbau in das entstehende Kraftfahrzeug für sich zusammengefügt und auf ihre bestimmungsgemäße Funktionsfähigkeit geprüft werden können.

Üblicherweise bestehen herkömmliche Türmodule aus einer Metallplatte, an die notwendige Halte- und Führungselemente angeschraubt oder angeschweisst werden. Türmodule aus Metall haben aber nachteiligerweise ein relativ hohes Eigengewicht, das im Zuge von Energieeinsparungen möglichst reduziert werden sollte.

Aus der EP-A-0 561 440 ist bereits ein Türmodul bekannt, der aus Kunststoff besteht und von seinem Gewicht her akzeptabel ist. Der aus der Literatur bekannte Türmodul ist jedoch im Hinblick auf die Vielseitigkeit seiner Verwendungsmöglichkeiten noch verbesserungswürdig.

Es bestand daher die Aufgebe, einen Türmodul zu entwickeln, der großtechnisch einfach herzustellen ist, der aber noch mehr Halte-, Führungs- und Bedienungselemente enthält und daher die maschinelle Montage noch weiter vereinfacht.

Gelöst wird diese Aufgabe durch einen Türmodul der eingangs genannten Gattung, dessen Kennzeichenmerkmale darin zu sehen sind, dass er als zusätzlichen integralen Bestandteil elektrisch leitende Stromverbindungen von einem zentralen Anschluß an jeweils einzubauende Funktionselemente besitzt.

Unter einem Türmodul ist erfindungsgemäß eine einstückige selbsttragende Trägerplatte zu verstehen, die in ihrer dreidimensionalen Geometrie im wesentlichen der Geometrie der Kraftfahrzeugtür, in die sie eingebaut werden soll, angepasst ist. Die Schichtdicke der Trägerplatte kann zwischen 0,3 bis 5 cm variieren. Trägerplatten mit geringeren Schichtdicken benötigen gegebenenfalls Verstärkungsrippen, während bei solchen mit größerer Schichtdicke auf Verstärkungsrippen verzichtet werden kann.

Der erfindungsgemäße Türmodul ist aus thermoplastischem Kunststoffmaterial aufgebaut, vorzugsweise aus glasfaser- oder kohlefaserverstärktem Kunststoff auf Basis vonPolypropylen, Polyamid, Polyester, Polyphenylenoxid, Polyphenylensulfid, Polyurethan, Polycarbonat oder Blends aus Polyester mit Acrylnitril-Butadien-Styrol-Copolymeren oder mit Acrylnitril-Styrol-Acrylester-Pfropfpolymeren. Als Polyester können insbesondere Polyethylenterephthalat oder Polybutylenterephthalat eingesetzt werden. Die Glasfaserverstärkung kann wahlweise mit Langfasern oder mit Kurzfasern bewirkt werden.

Der erfindungsgemäße Türmodul besitzt eine Vielzahl von aus der Fläche der Trägerplatte hervorstehender Halte- und Führungselemente als integrale Bestandteile, in die ortsfest zu fixierende Funktionselemente dauerbeständig eingepasst werden können oder die geometrisch so ausgebildet sind, dass bewegliche Funktionselemente in ihrer bestimmungsgemäßen Bewegungsrichtung lenkend geführt werden. Insbesondere sind Fensterheberschienen für das in der Kraftfahrzeugtür beweglich angeordnete Seitenfenster aus Glas in den erfindungsgemäßen Türmodul integriert sowie die Haltelemente für den die Bewegung der Seitenfenster bewirkenden Elektromotor. Vorzugsweise können auch noch Führungsschienen für das Seitenfenster in den seitenrandnahen Bereichen des erfindungsgemäßen Türmoduls mit integriert sein.

Der erfindungsgemäße Türmodul wird vorzugsweise durch herkömmliche Techniken wie Spritzguß, Thermoformen, Heißpressen, Spritzprägen, Niederdruckspritzguß oder Blasformen hergestellt.

Ein integraler Bestandteil des erfindungsgemäßen Türmoduls sind die elektrischen Stromzuleitungen zu dem Elektromotor oder zu anderen Elektroaggregaten, die vorzugsweise in der Form elektrischer Leiterbahnen ausgebildet sind. Die Herstellung dieser Leiterbahnen erfolgt vorzugsweise durch Aufbringen von elektrisch leitfähigem Material auf eine elektrisch isolierende Folie und anschließendes Hinterspritzen oder Hinterpressen dieser Kombination mit einem thermoplastischen Kunststoff, der ein elektrisch isolierendes Material darstellt, zur Ausbildung des Türmoduls. Als elektrisch leitfähiges Material kann elektrisch leitfähige Paste oder eine dünne Metallschicht oder aufgedampftes Metall oder elektrisch leitfähiger Kunststoff, der Metallpartikeln, isbesondere Edelstahlfasern, oder Ruß oder Kohlefasern enthält, verwendet werden. Als elektrisch isolierende Folie kann eine Folie aus Polyolefin, aus Cycloolefincopolymer, aus Polyester, aus Polyphenylensulfid, aus Polyimid oder aus Polyetherimid eingesetzt werden.

Vorteilhafterweise sind die Leiterbahnen an der Stelle, an der sie aus dem Türmodul heraustreten und die den zentralen Anschluß bildet, um einen Winkel von ca. 90° abgewinkelt, um das Aufstecken von Kontaktelementen zu erleichtern.

In der vorstehend beschriebenen Ausführungsform des erfindungsgemäßen Türmoduls kann die isolierende Folie aus Kunststoff gleichzeitig die wichtige Funktion der Feuchtigkeitssperre innerhalb der Kraftfahrzeugtür übernehmen. Zur noch besseren Feuchtigkeitssperre kann zusätzlich an oder auf den Türmodul oder die Folie noch eine Dichtmasse zur Abdichtung der Fugen zu angrenzenden oder aufgesetzten Oberflächen aufgebracht oder angespritzt werden.

In einer weiteren Ausgestaltung des erfindungsgemäßen Türmoduls können die Leiterbahnen als elektrisch leitende Verbindungen durch einen elektrisch leitfähigen Kunststoff, z.B. stahlfaser- oder kohlefasergefülltes Polymer, im 2-Komponenten Spritzguß oder durch zwei aufeinanderfolgende Spritzgußschritte in die Trägerplatte des Türmoduls integriert sein.

In einer weiteren Ausgestaltung des erfindungsgemäßen Türmoduls können die Leiterbahnen als elektrisch leitende Verbindungen durch Heißprägen von Al- oder Cu-Folie auf die isolierende Folie aus Kunststoff oder auf die Trägerplatte des Türmoduls integriert sein.

Gleichzeitig mit den elektrischen Stromzuleitungen für den Elektromotor, der die Bewegungen der Seitenfenster hervorruft, können auch Leiterbahnen für andere Aggregate in den erfindungsgemäßen Türmodul integriert werden. Beispielsweise kann in den Türmodul, je nach Bedarf, noch ein Elektromotor zur Justierung des Außenspiegels oder auch ein Lautsprecher mit zugehörigem Lautsprechergitter oder Schloßgehäuse oder weitere elektrische oder elektronische Vorrichtungen, die der Sicherheit der Kraftfahrzeuginsassen dienen, eingebaut werden.

Je nachdem, ob der erfindungsgemäße Türmodul vollständig aus einem thermoplastischen Material mit vom Material her schon besonders hoher mechanischer Verschleißfestigkeit aufgebaut ist oder nicht, kann es von besonderem Vorteil sein, wenn der Türmodul, vorzugsweise wenigstens im Bereich der Fensterheberschienen für das Seitenfenster, einer besonderen Nachbehandlung unterzogen wird, um speziell dort, im Bereich der Fensterheberschienen, eine besonders hohe Verschleißfestigkeit gegenüber den Halterungselementen für die Seitenfenster zu gewährleisten. Die Halterungselemente für die Seitenfenster, die auf den Fensterheberschienen beweglich angeordnet sind, sind normalerweise aus Polyacetal, insbesondere aus Polyoxymethylen, gefertigt. Zur Nachbehandlung kann der erfindungsgemäße Türmodul einer Coronasprühentladung oder einer Plasmabehandlung oder einer Flammbehandlung unterzogen werden, die wenigstens im Bereich der Fensterheberschienen für das Seitenfenster zur Anwendung kommt.

In einer weiteren Ausgestaltung der Erfindung kann die Verschleißfestigkeit gegenüber den Halteelementen aus Polyoxymethlen auch durch Hinterpressen oder Hinterspritzen des Türmoduls im Bereich der kritischen Stellen der Fensterheberschienen für das Seitenfenster mit Kunststoffmaterial, das inhärent schon eine hohe Verschleißfestigkeit gegenüber Polyoxymethylen aufweist, realisiert werden.

Nachfolgend soll die Erfindung beispielhaft anhand von Zeichnungen für den Fachmann noch deutlicher dargestellt werden.
**Figur 1** zeigt eine perspektivische Darstellung eines erfindungsgemäßen Türmoduls von der Seite, die dem Fahrgastinnenraum zugewandt ist.
**Figur 2** zeigt eine perspektivische Darstellung eines erfindungsgemäßen Türmoduls von der Seite, die dem Fahrgastinnenraum abgewandt ist.

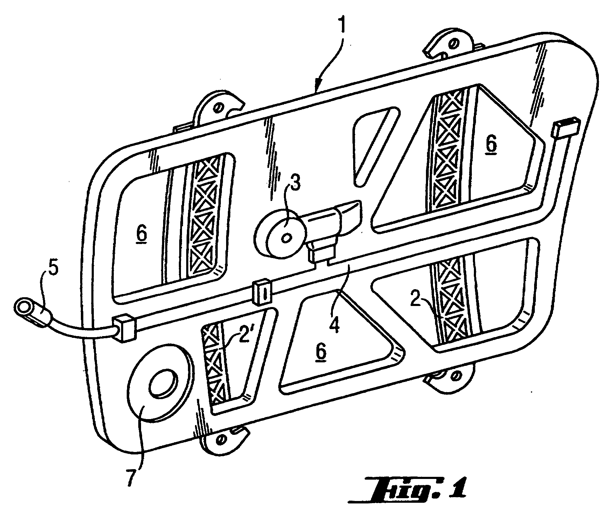

In Figur 1 ist durch Bezugszeichen die Trägerplatte 1 hervorgehoben, die in ihrer dreidimensionalen Geometrie im wesentlichen an die leichte Wölbung einer Kraftfahrzeugtür angepasst ist. Die senkrecht verlaufenden Fensterheberschienen 2/2' für die nicht dargestellten Seitenfenster stellen einen integralen Bestandteil des Türmoduls dar und ersetzen die normalerweise in diesem Bereich nachträglich aufgebrachten Fensterheberschienen aus Metall. Die Trägerplatte 1 ist in der dargestellten Ausführungsform zur verbesserten Gewichtsreduzierung nicht vollflächig ausgebildet, sondern sie besitzt verschiedene trapezförmig gestaltete Ausnehmungen 6 und insbesondere auch eine Halterung 3 für den nicht dargestellten Elektromotor und eine runde Ausnehmung 7 für den Lautsprecher. Ferner ist in Figur 1 die Stromzufuhr 4 in Form von Leiterbahnen erkennbar, die über den zentralen Stromanschluß 5 mit elektrischem Strom gespeist werden kann.

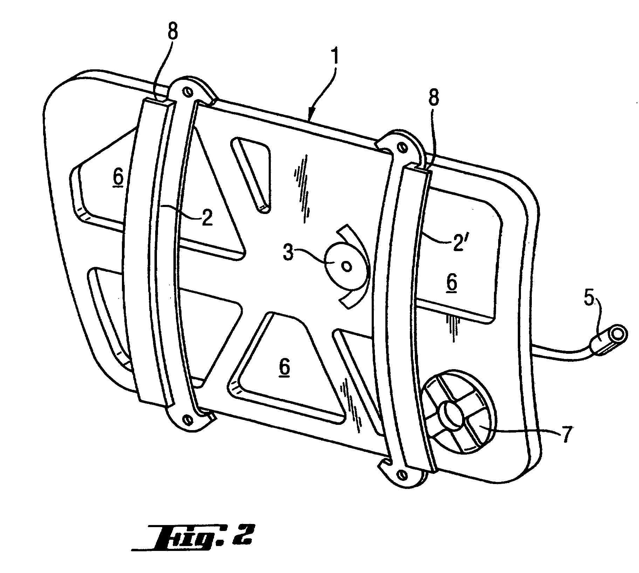

In Figur 2 haben gleiche Bezugszeichen gleiche Bedeutung wie in Figur 1. Insbesondere ist auch dort die Trägerplatte 1 dargestellt sowie die senkrecht verlaufenden Fensterheberschienen 2/2' für die nicht dargestellten Seitenfenster. Die Trägerplatte 1 weist trapezförmige Ausnehmungen 6, eine Halterung 3 für den Elektromotor und eine runde Ausnehmung 7 für den Lautsprecher auf. Seitlich ist der zentrale Stromanschluß 5 erkennbar, der zu den in dieser Darstellung nicht sichtbaren Leiterbahnen führt. Zusätzlich ist in der Figur noch erkennbar, dass die Fensterheberschienen 2/2' zur besseren Fensterhebungsgenauigkeit mit Rillen 8 versehen sind, die zur Verbesserung ihrer Verschleißfestigkeit einer nicht sichtbaren Nachbehandlung unterzogen sind.

## Patentansprüche

1. Einstückiger Türmodul für Kraftfahrzeuge aus thermoplastischem Kunststoff umfassend eine selbsttragende Trägerplatte und eine Vielzahl von integralen Halteelementen in Form von Erhebungen, Vertiefungen und Ausnehmungen, **dadurch gekennzeichnet, dass** er als zusätzlichen integralen Bestandteil elektrisch leitende Stromverbindungen von einem zentralen Anschluß an jeweils einzubauende Funktionselemente besitzt.

2. Türmodul gemäß Anspruch 1, **dadurch gekennzeichnet, dass** er eine einstückige selbsttragende Trägerplatte enthält, die in ihrer dreidimensionalen Geometrie im wesentlichen der Geometrie der Kraftfahrzeugtür, in die sie eingebaut werden soll, angepasst ist und eine Schichtdicke im Bereich von 0,3 bis 5 cm besitzt.

3. Türmodul gemäß Anspruch 1 oder 2, **dadurch gekennzeichnet, dass** er aus thermoplastischem Kunststoffmaterial aufgebaut ist, vorzugsweise aus glasfaser- oder kohlefaserverstärktem Kunststoff auf Basis von Polypropylen, Polyamid, Polyester, Polyphenylenoxid, Polyphenylensulfid, Polyurethan, Polycarbonat oder Blends aus Polyester mit Acrylnitril-Butadien-Styrol-Copolymeren oder mit Acrylnitril-Styrol-Acrylester-Pfropfpolymeren.

4. Türmodul gemäß einem der Ansprüche 1 bis 3, **dadurch gekennzeichnet, dass** Fensterheberschienen für ein beweglich angeordnetes Seitenfenster in den Türmodul integriert sind sowie Halteelemente für den die Bewegung der Seitenfenster bewirkenden Elektromotor.

5. Türmodul gemäß einem der Ansprüche 1 bis 4, **dadurch gekennzeichnet, dass** die elektrischen Stromzuleitungen in der Form elektrischer Leiterbahnen ausgebildet sind.

6. Türmodul gemäß Anspruch 5, **dadurch gekennzeichnet, dass** die Leiterbahnen durch Aufbringen von elektrisch leitfähigem Material auf eine elektrisch isolierende Folie und anschließendes Hinterspritzen oder Hinterpressen dieser Kombination mit einem thermoplastischen Kunststoff, der ein elektrisch isolierendes Material darstellt, zur Ausbildung des Türmoduls hergestellt sind.

7. Türmodul nach Anspruch 6, **dadurch gekennzeichnet, dass** er als elektrisch leitfähiges Material elektrisch leitfähige Paste oder eine dünne Metallschicht oder aufgedampftes Metall oder elektrisch leitfähigen Kunststoff enthält, der Metallpartikeln, insbesondere Edelstahlfasern, oder Ruß oder Kohlefasern enthält.

8. Türmodul nach Anspruch 6, **dadurch gekennzeichnet, dass** er als elektrisch isolierende Folie eine Folie aus Polyolefin, Cycloolefincopolymer, Polyester, Polyphenylensulfid, Polyimid oder Polyetherimid enthält.

9. Türmodul gemäß Anspruch 8, **dadurch gekennzeichnet, dass** die isolierende Folie aus Kunststoff gleichzeitig die Funktion einer Feuchtigkeitssperre innerhalb der Kraftfahrzeugtür übernimmt.

10. Türmodul gemäß Anspruch 9, **dadurch gekennzeichnet, dass** zur Verbesserung der Feuchtigkeitssperre zusätzlich auf den Türmodul oder die Folie noch eine Dichtmasse zur Abdichtung der Fugen zu angrenzenden oder aufgesetzten Oberflächen aufgebracht oder angespritzt wird.

11. Türmodul gemäß Anspruch 5, **dadurch gekennzeichnet, dass** die Leiterbahnen als elektrisch leitende Verbindungen durch einen elektrisch leitfähigen Kunststoff wie stahlfaser- oder kohlefasergefülltes Polymer im Zweikomponenten Spritzguß oder durch zwei aufeinanderfolgende Spritzgußschritte in die Trägerplatte des Türmoduls integriert sind.

12. Türmodul gemäß Anspruch 5, **dadurch gekennzeichnet, dass** die Leiterbahnen als elektrisch leitende Verbindungen durch Heißprägen von Al- oder Cu-Folie auf die elektrisch isolierende Folie oder die Trägerplatte des Türmoduls integriert sind.

13. Türmodul nach einem der Ansprüche 1 bis 12, **dadurch gekennzeichnet, dass** er im Bereich der Fensterheberschienen für das Seitenfenster eine besonders hohe Verschleißfestigkeit gegenüber den Halterungselementen für die Seitenfenster besitzt.

## Claims

1. One-piece door module for motor vehicles made from thermoplastic and encompassing a self-supporting carrier panel and a multiplicity of integral retaining elements in the form of elevations, depressions and cutouts, **characterized in that** it has, as an additional integral constituent, electrically conducting connections from a central supply to functional elements respectively to be incorporated.

2. Door module according to Claim 1, **characterized in that** it comprises a one-piece self-supporting carrier panel whose three-dimensional shape has essentially been matched to the shape of the motor vehicle door into which it is to be incorporated, and whose thickness is in the range from 0.3 to 5 cm.

3. Door module according to Claim 1 or 2, **characterized in that** it is composed of thermoplastic material, preferably of glass-fibre- or carbon-fibre-reinforced plastic based on polypropylene, polyamide, polyester, polyphenylene oxide, polyphenylene sulphide, polyurethane, polycarbonate or blends of polyester with acrylonitrile-butadiene-styrene copolymers or with acrylonitrile-styrene-acrylate graft polymers.

4. Door module according to any one of Claims 1 to 3, **characterized in that** window lifter profiles for a movable side window, and also retaining elements for the electric motor which moves the side windows, have been integrated into the door module.

5. Door module according to any one of Claims 1 to 4, **characterized in that** the electrical feeds have been constructed as electrical conductor tracks.

6. Door module according to Claim 5, **characterized in that** the conductor tracks have been produced by applying electrically conductive material to an electrically insulating film, and then moulding or pressing an electrically conductive thermoplastic material onto this combination, to construct the door module.

7. Door module according to Claim 6, **characterized in that** the electrically conductive material is electrically conductive paste or a thin layer of metal or vapor-deposited metal or electrically conductive plastic which comprises metal particles, in particular stainless-steel fibres, or carbon black or carbon fibres.

8. Door module according to Claim 6, **characterized in that** the electrically insulating film is a film made from polyolefin, cycloolefin copolymer, polyester, polyphenylene sulphide, polyimide or polyetherimide.

9. Door module according to Claim 8, **characterized in that** the insulating film made from plastic simultaneously functions as a moisture barrier within the motor vehicle door.

10. Door module according to Claim 9, **characterized in that** in addition, a sealing composition for sealing the joints with adjacent or superimposed surfaces is applied to or injection-moulded onto the door module to improve the moisture barrier.

11. Door module according to Claim 5, **characterized in that** the conductor tracks in the form of electrically conducting compounds have been integrated into the carrier panel of the door module using an electrically conductive plastic, such as steel-fibre- or carbon-fibre-filled polymer, in two-component injection moulding or using two injection-moulding steps in succession.

12. Door module according to Claim 5, **characterized in that** the conductor tracks in the form of electrically conducting compounds have been integrated onto the electrically insulating film or the carrier panel of the door module by hot-stamping of aluminium foil or copper foil.

13. Door module according to any one of Claims 1 to 12, **characterized in that**, in the area of the window lifter profiles for the side window, it has particularly high wear resistance with respect to the retaining elements for the side windows.

## Revendications

1. Module de portière en une pièce en matériau synthétique thermoplastique pour véhicule automobile, qui comprend une plaque de support autoportante et plusieurs éléments de maintien intégrés sous la forme de saillies, de creux et de découpes dans la matière, **caractérisé en ce que** qu'il présente comme composant intégré supplémentaire des liaisons électriquement conductrices entre un raccord central et des éléments de fonctionnement particuliers à monter.

2. Module de portière selon la revendication 1, **caractérisé en ce qu'**il contient une plaque de support autoportante en une pièce dont la géométrie tridimensionnelle est essentiellement adaptée à la géométrie de la portière de véhicule automobile dans laquelle elle doit être montée et dont l'épaisseur est comprise entre 0,3 et 5 cm.

3. Module de portière selon les revendications 1 ou 2, **caractérisé en ce qu'**il est formé en matériau synthétique thermoplastique et de préférence en matériau synthétique renforcé par fibres de verre ou fibres de carbone, le matériau synthétique étant à base de polypropylène, de polyamide, de polyester, de poly(oxyde de phénylène), de poly(sulfure de phénylène), de polyuréthane, de polycarbonate ou de mélanges de polyester avec des copolymères d'acrylonitrile, de butadiène et de styrène ou avec des polymères greffés d'acrilonitrile, de styrène et d'acrylester.

4. Module de portière selon l'une des revendications 1 à 3, **caractérisé en ce que** des rails de lève-vitre destinés à une vitre latérale agencée à déplacement ainsi que des éléments de maintien du moteur électrique qui déplace la vitre latérale sont intégrés dans le module de portière.

5. Module de portière selon l'une des revendications 1 à 4, **caractérisé en ce que** les conducteurs électriques sont configurés sous la forme de pistes conductrices.

6. Module de portière selon la revendication 5, **caractérisé en ce que** les pistes conductrices sont réalisées en apportant un matériau électriquement conducteur sur un film électriquement isolant et en injectant ou en pressant un matériau synthétique thermoplastique isolant derrière cette combinaison, afin de former le module de porte.

7. Module de portière selon la revendication 6, **caractérisé en ce que** le matériau électriquement conducteur qu'il contient est une pâte électriquement conductrice, une fine couche de métal, du métal déposé sous vide, un matériau synthétique électriquement conducteur qui contient des particules de métal et en particulier des fibres d'acier inoxydable, de la suite ou des fibres de carbone.

8. Module de portière selon la revendication 6, **caractérisé en ce que** le film électriquement isolant qu'il contient est un film en polyoléfine, en polymère de cyclooléfine, en polyester, en poly(sulfure de phénylène), en polyimide ou en polyétherimide.

9. Module de portière selon la revendication 8, **caractérisé en ce que** le film isolant en matériau synthétique assure en même temps la fonction de barrière anti-humidité dans la portière de véhicule automobile.

10. Module de portière selon la revendication 9, **caractérisé en ce que**, pour améliorer la barrière anti-humidité, on apporte ou on injecte en outre une pâte d'étanchéité sur le module de portière ou sur le film afin de rendre étanches les jonctions avec les surfaces adjacentes ou déposées dessus.

11. Module de portière selon la revendication 5, **caractérisé en ce que** les pistes conductrices réalisées en un matériau synthétique électriquement conducteur, par exemple un polymère chargé de fibres d'acier ou de fibres de carbone sont intégrées comme liaisons électriquement conductrices dans la plaque de support du module de portière par moulage par injection de deux composants ou par deux étapes successives de moulage par injection.

12. Module de portière selon la revendication 5, **caractérisé en ce que** les pistes conductrices sont intégrées sur le film électriquement isolant ou sur la plaque de support du module de portière par estampage à chaud d'un film d'Al ou de Cu.

13. Module de portière selon l'une des revendications 1 à 12, **caractérisé en ce que**, dans la région des rails de lève-vitre destinés à la vitre latérale, il est particulièrement plus résistant à l'usure que les éléments de maintien de la vitre latérale.
